# EUROPEAN PATENT SPECIFICATION

(11) **EP 3 353 067 B1**
(45) Date of publication and mention of the grant of the patent: **28.10.2020**
(21) Application number: 16849104.1
(22) Date of filing: 13.09.2016
(51) Int. Cl.: B65B 27/10, A01G 23/00, B65B 13/20, B60P 3/41, B65B 13/12, B66C 1/58, B66C 23/44

(54) **DEVICE FOR BUNDLING THE LIMBED TREE PARTS AND VEHICLE COMPRISING SUCH A DEVICE**
VORRICHTUNG ZUM BÜNDELN VON ENTASTETEN BAUMTEILEN UND FAHRZEUG MIT EINER SOLCHEN VORRICHTUNG
DISPOSITIF DE GROUPAGE DE PARTIES D'ARBRE ÉBRANCHÉES ET VÉHICULE COMPRENANT UN TEL DISPOSITIF

(30) Priority: 22.09.2015 SE 1551212
(43) Date of publication of application: 01.08.2018
(73) Proprietor: Cintoc AB, 921 45 Lycksele (SE)
(72) Inventor: LINDBERG, Erik, 915 98 Bygdeå (SE); OLOFSSON, Lennart, 903 21 Umeå (SE)
(74) Representative: Zacco Sweden AB
(86) International application number: PCT/SE2016/050856
(87) International publication number: WO 2017/052447

(56) References cited:
- EP-A1- 1 512 321
- EP-A2- 2 198 695
- DE-A1-102008 057 453
- SE-C2- 520 186
- SE-C2- 520 186
- SE-C2- 526 235
- SE-C2- 526 235
- US-A1- 2006 093 441

## Description

The present invention concerns an arrangement for the bundling of elongated tree parts and similar forestry material, comprising not only a gripper in order to bring the objects together while a compressed bundle of these is formed, but also a binding arrangement that demonstrates a ring along which a magazine for thread or a similar extended element is arranged in a planetary manner, intended to be wound around a bundle of objects surrounded by the ring in order to maintain the bundle in its compressed condition. The invention concerns also a terrain-going vehicle equipped with such an arrangement.

Bundling devices known as "bundlers" of the present type are intended to be carried on terrain-going vehicles and used to compress bundles of compressed tree parts and similar forestry material, to tie the material with what is known as "bundle string" during the formation of bundles having the form of logs or an extended shape. It should be understood that the expressions "extended forestry parts" and "forestry material" are used in the following to denote any form of biomaterial with an essentially elongated structure.

In order to lift and manipulate the said limbed tree parts and similar material, the said vehicle is equipped with a crane that is equipped with a gripper. As a consequence of this type of bundling arrangement, processed tree parts can be manipulated in a flexible and efficient manner similar to that used for conventional timber with respect to loading, transport, storage and consumption. Compression and binding or the application of string to the material take place in repeated cycles, whereby grippers that include a pair of compression arms that can be pivoted relative to each other grip and compress the collected material between them, while a binding arrangement with a string magazine that moves in a planetary manner around the bundle along the said ring binds the compressed material with string. Binding takes place successively along the length of the compressed forestry material such that essentially cylindrical material string that is bound by string at regular intervals is obtained. A bundle unit with the characteristics of a log can demonstrate, for example, a diameter of approximately 0.4-0.6 m, a pre-determined length of, for example, approximately 3-5 m, and a weight of up to approximately 1 tonne. A major advantage of these bundles of forestry material is that the bundles can be manipulated in a uniform manner, and occupy a limited space during forwarding. The bundles also have the advantage that different types of material can be united during thinning operations. The bundles can be stored lying in the ground for a considerable period without experiencing damage.

Within the forestry industry, developed systems have long been available for the loading and manipulation of the said bundles by means of forwarders from a felling site for delivery to a larger storage site next to a road, whereby transport onwards to consumers such as a heating facility or pellets mill can take place by means of timber trucks. For an effective manipulation of the bundles that are formed in the arrangement, it is important that each bundle can be removed from the bundling arrangement by being deposited in a controlled manner by the arrangement, i.e. deposited onto the ground.

In prior art bundling arrangements the bundling of forestry material has been characterised by limited capacity and a deficiency in the efficient use of the displaceable units of the arrangements for the compression and binding of forestry material. Among other things, it has not been possible to remove a bundle that has been formed from the bundling arrangement in a controlled manner. The bundle that has been formed is normally caused to fall from the arrangement freely and in an uncontrolled manner, which means that it has not been possible to determine in advance on which side of the arrangement the bundle is to fall or be deposited.

It is not seldom the case that the crane, equipped with a gripper, of the vehicle must be used to be able to remove the bundle from the arrangement. During the bundling operation, high availability and use of the crane, equipped with a gripper, for the filling and compression of limbed parts of trees are necessary in order to achieve a high productivity.

Since the primary area of use of the crane is to fill the bundling arrangement with parts of trees and similar forestry material for bundling, secondary use of the lifting crane to remove the bundles that have been formed from the bundling arrangement means that the availability of the crane, equipped with a gripper, for the said primary task is limited.

SE 515478 describes a bundling arrangement with supports that can be displaced in a reciprocating motion along a longitudinal axis of a beam, on which supports a binding arrangement and pairwise arranged opposing grippers and compression means are located. The said supports are connected by hydraulic cylinders. A fixed support with an upwards directed fork is located at the rear end of the beam. The gripper and compression means is connected such that it can be manoeuvred synchronously between a withdrawn and an extended condition. The term "synchronous" is used in this part to denote that the arms are coupled such that they move in a united manner towards and away from each other, which in this case takes place through a parallel strut, whereby only one of the arms is influenced by a hydraulic cylinder. The bundles that have been formed are removed by being lifted or allowed to fall freely from the bundling arrangement. SE 520 186 C2, SE 526 235 C2 and EP 1 512 321 A1 illustrate other bundling arrangements.

A further problem with prior art arrangements is that they do not give information about the volume produced in cubic metres (m³) of the forestry material that has been bundled to form units having the characteristics of logs. During modern and rational forestry operations, it is important to know the dimensions and volume in cubic metres (m³) and, where relevant, also the weight of the forestry material that has been processed, not least to make it possible to carry out correct deliveries not only to clients but also to end users such as the paper/pulp industry, pellets mills or heating facilities. Forest owners normally sell with the delivery condition "free at road" to the end user, such as customers in the paper/pulp industry, whereby it is important to monitor the volume of the forestry raw material that is sold.

There is thus a desire to use the displaceable units of the arrangements for compression and binding of forestry material in a more efficient manner and with improved control.

One purpose of the present invention, therefore, is to achieve an arrangement with the aid of which the above-specified problems of bundling arrangements can be solved, and in this way not only the production yield of the arrangements but also the monitoring of the volume produced can be considerably improved. This purpose of the invention is solved through a bundling arrangement that has been given the distinctive features and characteristics specified in claim 1.

In one examination of the invention, the bundling arrangement is equipped with at least two supports that can move independently of each other along a longitudinal axis and that are arranged to have separate operating arrangements. The position of each support along the longitudinal direction can be detected with the aid of a length measurement arrangement, and the pivoted position of each opposing gripper and compression arm can be detected by means of position sensors. The possibility of achieving improved monitoring of the said units makes it possible to use the displaceable units more efficiently and for additional tasks than simply gripping and compressing forestry material.

As a consequence of the improved monitoring of motion in combination with increased manoeuvrability, the gripper and compression arms of each pair of grippers can be pivoted out from the longitudinal axis of the bundle that has been formed, and can adopt a position that is angled downwards relative to the ground, whereby a bundle of forestry material can be deposited in a controlled manner through it sliding off from the side of the arrangement. Deposit of bundles can in this way take place in a controlled manner and the driver of the vehicle can determine on which side of the arrangement the bundle is to be deposited.

Sensors are arranged at the gripper and compression arms with which it is possible to detect the relative pivoted position of the relevant opposing gripper and compression arm in each pair, in order to achieve significantly improved opportunities for the monitoring and control of the motion of the gripper and compression arms. With the aid of a calculating unit, such as a computer, the positions of the grippers relative to each other can, during the compression of forestry material, serve as a measure of the cross-sectional dimension at the object bundle that has been formed, and can in this way be used to calculate the volume of forestry material produced. The gripper and compression arms, which are active in pairs, are supported on a support that can, in turn, be displaced in a reciprocating manner along a box shaped beam. The positions of the supports along the box beam are controlled and monitored by a length measurement arrangement that is a component of the bundling arrangement. Measurement signals from the supports can be used to calculate the volume of forestry material produced in cubic metres (m3).

The invention will be described below in more detail with reference to an embodiment that is shown in the attached drawings, of which:
Figure 1 shows a side view of a rear assembly at an articulated-frame terrain-going vehicle with a bundling arrangement according to the invention mounted at the rear assembly of the vehicle,
Figure 2 shows a cross-sectional view through gripper and compression arms that are mutually independent of each other and that are a component of the bundling arrangement, together with a bunch of tree parts under compression that have been collected in their longitudinal direction,
Figures 3 and 4 show a perspective view of the bundling arrangement according to the invention in a view from the front and from the back, respectively, and
Figures 5a-5g show the arrangement schematically at different steps during the conversion of a bunch of parts of trees to a completed bundle.

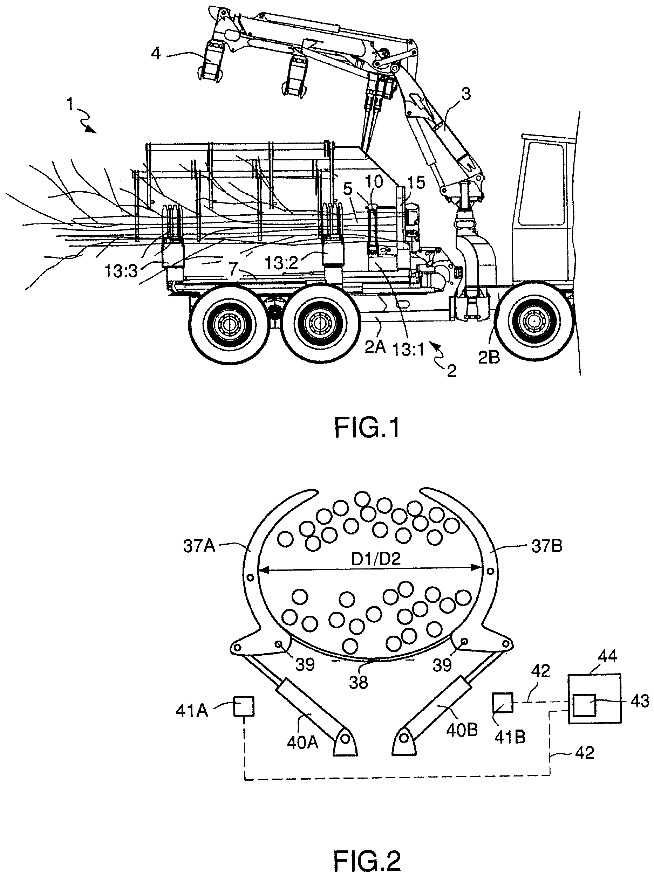

Figure 1 shows a bundling arrangement 1 according to the invention supported on a terrain-going vehicle 2 provided with wheels with forward 2A and rear 2B chassis components that are united in a jointed manner. The vehicle 2 is equipped with a crane 3 equipped with a gripper unit 4 for the processing and the lifting from the ground of objects with an initially large extent, such as limbed tree parts, and their deposit into the bundling arrangement. The reference number 5 denotes a bundle of tree parts and forestry material that has been taken up into the bundling arrangement 1. The forestry material 5 is collected and oriented into a bunch in the longitudinal direction for conversion in the bundling arrangement into units with the nature of logs or strings that can be handled, by compression and binding of the material.

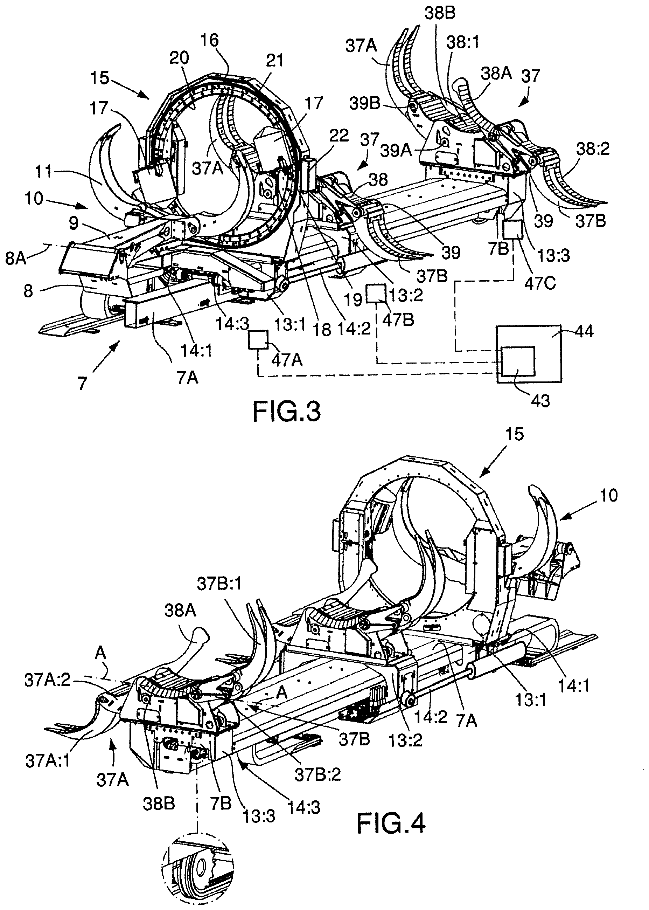

The bundling arrangement 1 is shown in greater detail in Figures 3 and 4. The bundling arrangement 1 is mounted at the rear chassis part 2B of the vehicle 2 and comprises a frame with the nature of a chassis that is principally constituted by an elongated box beam 7 equipped with a receiver for forestry material.

A first vertical support 8 is united with the box beam 7 at a forward end, which is in practice located closest to the driver's cabin of the terrain-going vehicle. A boom 9 is united in a jointed manner at the vertical support through a shaft 8A, which boom supports at a free end a first gripper 10. As is made clear by the drawing, the boom extends in a freely supporting manner essentially horizontally backwards when seen from the said cabin. The boom 9 and thus also the gripper 10 can be raised and lowered by means of a control and actuator means in the form of a hydraulic cylinder (not shown in the drawings) that operates between the boom and the vertical support. The gripper 10 includes a pair of two arms 11 that can be pivoted relative to each other and that can be repositioned by means of a control and actuator means (not shown in the drawings) between an extended open state and a withdrawn closed state in order for these arms to be opened and closed for the purpose of receiving and retaining by gripping a bunch of tree parts 5 during the bundling operation.

A first support 13:1 that can be displaced in reciprocating motion is located along the box beam 7 in the form of a box-shaped slider that surrounds the box beam 7. Displacement of the first support 13:1 along the box beam 7 takes place with the aid of a first operating arrangement 14:1 that comprises a chain that is connected to opposing ends of the support and that runs around cogged wheels that are integral to the ends of the box beam, which ends can be partially seen in Figure 4. One of these cogged wheels is driven by an appropriate driving source, such as a stepping motor (not shown in the drawings). The said first support 13:1 can be displaced with the aid of the upper part of the chain between forward and rear end positions along the box beam 7 and in this case stopped at the desired position along the length of the box beam.

A binding arrangement 15, e.g. a string binding arrangement 15, is mounted at the first support 13:1, which arrangement comprises an outer ring 16 and two magazines 17, from which string or a similar extended element can be fed. An electrically driven compression means 18 is also a component of the string binding arrangement 15 that is shown, in order to compress the string, and an electrically driven cutting means 19 in order to cut after binding the string that has been compressed in this way.

The outer ring 16 is equipped at its internal perimeter with a groove in which an inner ring 20 runs, which inner ring is equipped along its outer perimeter with a cogged gear 21. A drive motor 22 is attached at the outer ring 16 that is equipped on a drive shaft with a cogged wheel (not shown in the drawings) that interacts in a manner that transfers motion with the cogged gear of the inner ring 20. The inner ring 20 rotates on activation of the drive motor 22. The two magazines 17 are mounted diametrically opposite each other on the inner ring 20 and can in this way move in a planetary manner around a bundle that is surrounded by the said outer and inner rings 16, 20 in order in this way to equip it with a surrounding of string.

A second support 13:2 that can be displaced in a reciprocating manner is arranged on the box-shaped beam 7, which support comprises a box-shaped slider that surrounds the box beam 7. Displacement of the said second support 30:2 along the box beam 7 takes place with the aid of a second operating arrangement 14:2 that is separate from the said first operating arrangement 14:1 and that comprises a hydraulic cylinder that operates between the said first 13:1 and second supports 13:2. With the aid of the hydraulic cylinder, one end http://dms.zacco.com/sites/se/Case/9050748/41501951/P41501951EP00/P41501951EP00 2019-10-30 descr and claims amended clean.doc of which is united with the said first support 13:1 while its second end is united with the said second support 13:2, the second support 13:2 can be displaced along the box beam 7 relative to the first support and locked at desired locations.

The box-shaped beam 7 comprises two parts 7A and 7B, one of which is telescopically taken up inside the other, and it can be extended in that a rear part 7B, which is located inside a forward part 7A, can be displaced backwards out from the forward part. Displacement of the said rear telescopic part 7B takes place with the aid of a third operating arrangement 14:3 that is separate from the said first and second operating arrangements 14:1, 14:2 and that comprises a hydraulic cylinder (not shown in the drawings) that is taken up inside the box-shaped beam and that operates between the said first 7A and second parts 7B. The telescopic rear part 7B forms in this way in practice a box-shaped carrier or slider, of the type that has been described above, on which a third support 13:3 is arranged. With the aid of the hydraulic cylinder that has been taken up in the box beam, one end of which cylinder is united with the said first part 7A while its second end is united with the said second part 7B, the second part and thus also the third support 13:3 can be displaced backwards while the complete box beam 7, including the parts 7A and 7B, is telescopically extended or shortened.

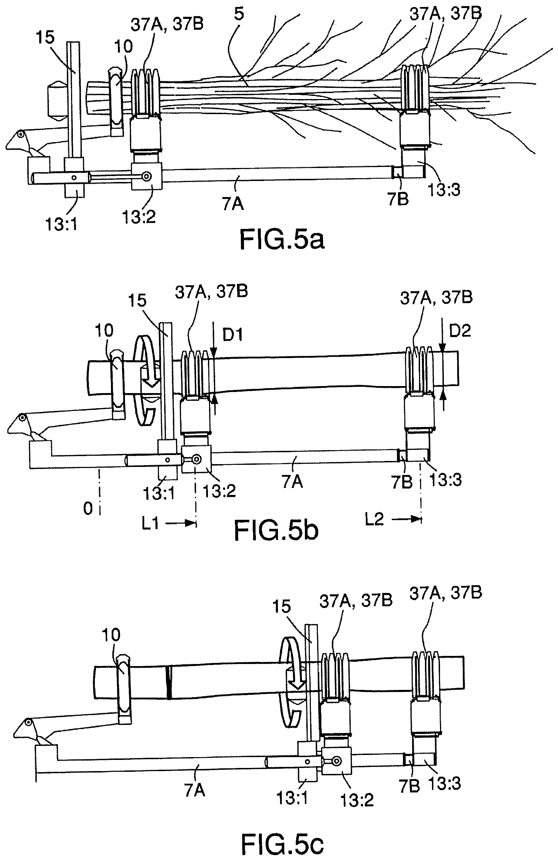

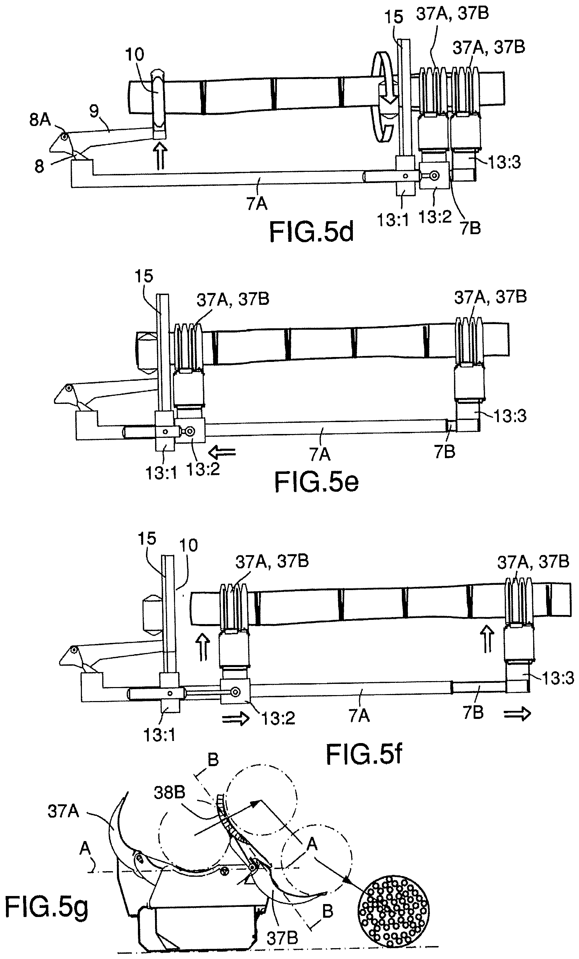

Each of the second and third supports 13:2, 13:3 supports a gripper 37 that includes two opposing compression arms 37A, 37B shaped as arcs of circles and displaceable relative to each other, which arms have between them a fixed support surface 38:1 with the form of an arc of a circle and which arms further demonstrate support surfaces 38:2 with the form of an arc of a circle and facing each other, the task of which is to interact with the surrounded forestry material. Each gripper and compression arm 37A, 37B is formed as a double jointed pair of link arms consisting of the link arms 37A:1, 37A:2; and 37B:1, 37B:2, respectively, and each thus forms in this way a unit that is mounted to pivot in bearings at a support pin 39A in the support, and mounted to pivot relative to each other between the two link arms at a support pin 39B in order to grip and compress between them forestry material for binding, and inversely to pivot in the opposite direction at a downwards angle in order to form, as is shown in Figure 5g, a glide plane B-B for the efficient and controlled deposit of bundles.

Since these two grippers 37 are identical, for reasons of simplicity only one of them will be described in more detail.

As is shown in Figure 2, an actuator 40A, 40B in the form of a hydraulic cylinder is connected to each arm in order to provide the pivoting of the gripper and compression arms 37A, 37B of the gripper 37. Each gripper and compression arm 37A, 37B is reset into a surrounding condition that is transverse to the longitudinal direction of the forestry material with the aid of the said actuator. The opposing gripper and compression arms 37A, 37B of each pair can be manoeuvred independently of each other and have been given such a degree of pivoting that each arm can be pivoted out from the longitudinal axis of the bundle that has been formed and can further adopt a position that is angled downwards towards the ground to form the said glide plane B-B for the bundles, i.e. an angular position in a direction downwards from a horizontal plane A-A that touches at a tangent the support plane 38 that has the form of an arc of a circle for a bundle between the gripper and compression arms 37A, 37B, as can also be seen in Figure 5g.

In order to further ensure that the bundle that has been formed falls from the arrangement in a controlled manner, an auxiliary lifting arm 38A, 38B is connected at each gripper and compression arm 37A, 37B of the pair. When one of the two gripper and compression arms 37A, 37B of the pair is set into the said downwardly pivoted condition, the associated auxiliary lifting arm 38A, 38B will be influenced, and will in this way - relieved of the weight of the gripper 10 - be released from this by being displaced on the second and third supports 13:2, 13:3 along the longitudinal axis away from the gripper to a position at which the bundle can be transferred to the glide plane formed by the said downwardly pivoted gripper and compression arm and deposited in the longitudinal direction of the arrangement.

With reference again to Figure 2, the pivoted position of each gripper and compression arm 37A, 37B is detected with the aid of a position sensor 41A, 41B at each arm, which position sensor may be incorporated into the relevant actuator or may be arranged as an angle sensor at the said support pin 39A, 39B. The fixed support surface 38 between the gripper and compression arms 37A, 37B constitutes in this way a fixed reference such that measurement of the diameter of the bundle that has been formed can take place at three measuring points, including the said support surface and the two opposing gripper and compression arms. Signal transmission means such as signal lines 42 transmit the positions of the gripper and compression arms, and the measurement results that have been obtained are fed to a calculation unit such as a computer 43 in an electronic control unit 44 that may be incorporated into either the bundling arrangement or the vehicle. The distance D1 is a measure of the cross-sectional dimension of the bundle at three triangular points including contact points at the two gripper and compression arms 37A, 37B of the second support 13:2 and the intermediate fixed support plane 38 that has the form of an arc of a circle. The distance D2 is in a corresponding manner a measures of the cross-sectional dimension of the bundle at the gripper and compression arms 37A, 37B of the third support 13:3 and the support plane 38 that has the form of an arc of a circle.

As is made clear by Figure 3, the positions of the first, second and third supports 13:1, 13:2, 13:3 along the box beam 7 are controlled and monitored by a length measurement arrangement that is a component of the present bundling arrangement, which measurement arrangement comprises in known manner a control and regulatory system, with the aid of which the positions of the said supports are determined by position sensors 47A, 47B, 47C. It is appropriate that these position sensors be integrated as angular sensors directly in the relevant drive motor or hydraulic cylinder that is a component of the relevant operating arrangement 14:1, 14:2, 14:3, alternatively arranged as linear position sensors between support and box beam. The signal means such as signal lines 48 transmit the positions on the beam 7 of the supports 13:1, 13:2, 13:3 and the measurement results that have been obtained are fed to the said calculation unit (computer) 43 in the said control unit 44. The said computer 43 retrieves and transmits signals in the form of the currently prevalent values and pre-determined target values for the positions along the beam 7 of the supports 13:1, 13:2, 13:3. The positions and longitudinal displacements of the supports provide the necessary parameters such that the computer has, at each moment, information about exactly where each support is positioned along the beam 7. This make it possible to control the supports 13:1, 13:2, 13:3 independently of each other and to calculate approximately the volume of bundled forestry material that has been produced as the product of the cross-sectional dimension D1, D2 of the bundle at one or several binding sites and the lengths L1, L2 to each binding site, based on an origin or reference location at the gripper 10 that is located farthest forwards. It should be understood that the weight of the bundle that has been formed can be calculated in the computer 43 using information about the mass per unit volume of the bundled forestry material, i.e. its density. It should furthermore be understood that displacement of not only the first support 13:1 but also the third support 13:3 according to the present invention can take place independently of each other, while each one of the said first and third operating arrangements 14:1, 14:3 imparts to the said support motion along the beam 7 that is related to the forward part 7A of the beam 7.

With reference to Figures 5a-5g, the various steps of the present bundling arrangement during the conversion of a bunch of parts of trees to a completed bundle are described.

The arrangement is shown in Figure 5a in a first step in an initial condition filled with forestry material. In this case, the first support 13:1 is at a forward position at which it is located in front of the gripper 10 that is located farthest forwards. The gripper and compression arms 37A, 37B of the second 13:2 and third 13:3 supports are located in the open condition. Since the gripper 10 is freely supported on a boom 9 and the pivotable arms 11 of the gripper 10 are, in their withdrawn condition, smaller than the inner ring 20 of the string binding arrangement 15, it is possible for the string binding arrangement 15 to pass externally of the gripper 10 on its way towards its forward end position. With the first support 13:1 and the string binding arrangement 15 at this forward end position, it is possible for forestry material to be received and surrounded by the gripper 10 and by the gripper and compression arms 37A, 37B of the second 13:2 and third 13:3 supports, respectively.

In a second step shown in Figure 5b, the forestry material is held in a bunch fixed at its forward end by means of the gripper 10, and the gripper and compression arms 37A, 37B have been subjected to a pre-determined pressure that compresses the forestry material. The first support 13:1 with the string binding arrangement 15 is displaced backwards to a position at which it is located close to the gripper and compression arms, whereby a string binding operation with bundling string is carried out through the motor 22 being activated, whereby the string magazine 17 is caused to rotate a specified number of revolutions such that a loop that holds the bundle together is formed, after which the string is compressed by means of compression means 18 and can be cut by means of the cutting means 19. The cross-sectional dimension D1 of the bundle at position L1 along the beam 7 is recorded by the computer 43. It can be mentioned that it is conceivable in a modified design of the invention that the string (also known as bundling string) is not cut until the final string has been placed around the bundle.

In a third step shown in Figure 5c, a specified number of addition loops of string is successively applied around the bundle in a manner that corresponds to that described in the above steps, through the said first and second supports 13:1, 13:2 and in this way also the string binding arrangement 15 and the gripper and compression arms 37A, 37B being displaced backwards. The cross-sectional dimension of the bundle at the positions D2/L2 along the beam can be recorded by the computer 43 in a corresponding manner to that described above, as is illustrated in Figure 5b. The steps described above are repeated until the complete bunch of tree parts has been processed.

In a fourth step shown in Figure 5d, the final loop of string is applied around the bundle.

In a fifth step 5e, which is illustrated with an arrow in Figure 5d, the forward end of the bundle that has been formed is raised by the boom 9 being angled upwards, after which the first and second supports 13:1, 13:2, and thus also the string binding arrangement 15 and the gripper and compression arms 37A, 37B, return forwards to the first initial position, which is shown in Figure 5a, with the difference that the second support 13:2 is displaced forwards to a position at which it is located close to the first support 13:1. This is illustrated by the arrows in the drawing. Due to the fact that the forward end of the bundle has been raised, damage to the string when the first and second supports 13:1, 13:2 move forwards to the initial position is avoided.

In a sixth step shown in Figure 5f, the gripper and compression arms 37A, 37B of the second 13:2 and third 13:3 supports, respectively, are opened. Depending on which side of the arrangement the extended bundle is to be deposited, one of the opposing gripper and compression arms 37A, 37B of each pair is pivoted at a downwards angle such that the formation of a glide plane B-B from the arrangement starts, whereby the auxiliary lifting arm 38A, 38B that is associated with the said arm is activated. During removal, the bundle is relieved of the weight from the gripper 10 by being lifted somewhat upwards by means of the auxiliary lifting arms 38A, 38B, whereby the bundle, resting on the intermediate support plane of the gripper and compression arms 37A, 37B that has the form of an arc of a circle, can be released from the gripper 10 through the said second and third supports 13:2, 13:3 that support the bundle being caused to move with synchronous speed in the direction away from the gripper 10 and backwards along the box beam 7. The said lifting operation of the bundle upwards and the displacement of the bundle backwards along the box beam 7 during removal are illustrated with vertical and horizontal arrows in Figure 5f. The pivotable arms 11 of the gripper 10 are in this case in the open condition.

In a seventh step shown in Figure 5g, the relevant gripper and compression arms 37A, 37B are pivoted from the said second and third supports 13:2, 13:3 at a downwards angle to such an extent that a glide plane B-B is formed down from the side of the arrangement, while the associated auxiliary lifting arm 38A, 38B at the same continues its motion upwards, whereby a glide plane B-B for the removal of the extended bundle from a freely chosen side of the arrangement is formed.

The invention is not limited to what has been described above and shown in the drawings: it can be changed and modified in several different ways within the scope of the innovative concept defined by the attached patent claims.

## Claims

1. An arrangement for the bundling of elongated tree parts (5) and similar forestry material to form manageable units, comprising
a reception arrangement (10) for the collection and orientation of forestry material in a longitudinal direction,
a binding arrangement (15) designed to fix the material in a compressed condition through binding it,
one or several pairs of grippers (37), each one of which demonstrates opposing gripper and compression arms (37A, 37B) the task of which is to surround and compress the material transverse to its longitudinal direction,
several supports (13:1, 13:2, 13:3) on which the said binding arrangement and the said opposing grippers (37) are controlled such that they can be displaced in reciprocating motion in the longitudinal direction,
an operating arrangement (14:1, 14:2, 14:3) arranged at each support (13:1, 13:2, 13:3) for the displacement of the said support in the longitudinal direction, **characterised in that** it comprises a first, second and third support (13:1, 13:2, 13:3), of which at least two of the supports are equipped with separate operating arrangements (14:1, 14:3) that permit the said relevant supports to move independently of each other in the longitudinal direction,
a length measurement arrangement with which the positions of the said two independently displaceable supports (13:1, 13:2, 13:3) along the longitudinal direction can be detected,
one or several position sensors (41A, 41B) with which the pivoted position of the opposing gripper and compression arms (37A, 37B) can be detected.

2. The arrangement according to claim 1, whereby the first and third operating arrangement (14:1, 14:3) that are used for the displacement of the said first and third supports (13:1, 13:3), respectively, are separate from each other.

3. The arrangement according to any one of claims 1-2, whereby the binding arrangement (15) is supported by the first support (13:1), while the gripper and compression arms (37A, 37B) are supported by the second and third supports (13:2, 13:3), respectively.

4. The arrangement according to any one of claims 1-3, comprising a calculation unit (43), such as a computer, for the calculation of a cross-sectional dimension (D1, D2) of the compressed forestry material (5) on the basis of the pivoted position of the opposing gripper and compression arms (37A, 37B) during binding.

5. The arrangement according to claim 4, comprising a calculation unit (43) for the calculation of the volume of forestry material (5) produced that has been bundled to form units having the nature of logs on the basis of the calculated cross-sectional dimension (D1, D2) and a pre-determined bundle length or a measured bundle length (L1, L2) on the basis of information from the length measurement unit.

6. The arrangement according to claim 5, comprising a calculation unit (43) for the calculation of the weight of the bundled forestry material (5) based on the density of the bundled forestry material.

7. The arrangement according to any one of claims 1-6, whereby the reception arrangement (10) comprises a gripper (10) with two opposing arms (11) that can pivot and that can receive and retain in a gripping manner between them a bunch of forestry material (5) during the bundling operation.

8. The arrangement according to claim 7, whereby the gripper (10) is located at a free end of a horizontal boom (9) whose opposite end is united in a jointed manner by a shaft (8A) with a vertical support (8) in which the vertical position of the gripper can be changed by means of a control and actuator means that acts between the boom and the vertical support.

9. The arrangement according to claim 7, whereby the binding arrangement (15) demonstrates such a dimension relative to the gripper (10) that the binding arrangement can pass externally to the gripper during motion towards a forward end position.

10. The arrangement according to any one of claims 1-9, whereby each gripper (37) comprises an intermediate fixed support surface (38:1) that is located between the opposing gripper and compression arms (37A, 37B), an auxiliary lifting arm (38A, 38B) that can be displaced relative to the fixed support plane; with which auxiliary lifting arm a bundle of forestry material can be lifted from the said support plane.

11. The arrangement according to any one of claims 1-10, whereby each gripper and compression arm (37A, 37B) is mounted in bearings to pivot at a support pin (39A, 39B) in the associated support (13:1, 13:2, 13:3) and arranged to be positioned at a condition in which it is caused to tilt in a transverse direction at an angle downwards from the arrangement.

12. The arrangement according to claim 11, whereby each gripper and compression arm (37A, 37B) comprises a double link arm pair (37A:1, 37A:2; and 37B:1, 37B:2, respectively) that is mounted in bearings to pivot at a support pin (39A, 39B) between them..

13. The arrangement according to any one of claims 1-11, comprising a beam (7) on which the said supports (13:1, 13:2, 13:3) are supported and controlled in a manner that allows them to be displaced in the longitudinal direction of the beam.

14. The arrangement according to claim 13, whereby the beam (7) is box-shaped and comprises two parts (7A and 7B) of which one is telescopically taken up inside the other, where the said beam can be extended through a rear part 7B being extruded outwards in the longitudinal direction backwards from a forward part 7A.

15. The arrangement according to claim 14, whereby the third support (13:3) forms a part of the rear part (7B) of the beam (7) that can be telescopically extended.

16. A terrain-going vehicle equipped with an arrangement according to any one of claims 1-14.

## Patentansprüche

1. Vorrichtung zum Bündeln von länglichen Baumteilen (5) und ähnlichem Forstwirtschaftsmaterial zur Bildung von handhabbaren Einheiten, umfassend eine Empfangsvorrichtung (10) zum Aufsammeln und Ausrichten von Forstwirtschaftsmaterial in einer Längsrichtung,
eine Bindevorrichtung (15), die zum Fixieren des Materials in einem verdichteten Zustand durch Binden davon ausgelegt ist,
ein oder mehrere Paare von Greifern (37), wovon jedes gegenüberliegende Greifer- und Verdichterarme (37A, 37B) aufweist, deren Aufgabe ist, das Material querlaufend zu seiner Längsrichtung zu umgeben und zu verdichten, mehrere Unterstützungen (13:1, 13:2, 13:3), auf weichen die Bindevorrichtung und die gegenüberliegenden Greifer (37) derart gesteuert werden, dass sie in einer Hin- und Herbewegung in der Längsrichtung verlagerbar sind,
eine Betriebsvorrichtung (14:1, 14:2, 14:3), die an jeder Unterstützung (13:1, 13:2, 13:3) zur Verlagerung der Unterstützung in der Längsrichtung,
**dadurch gekennzeichnet, dass** sie eine erste, zweite und dritte Unterstützung (13:1, 13:2, 13:3) umfasst, von denen mindestens zwei der Unterstützungen mit gesonderten Betriebsvorrichtungen (14:1, 14:3) ausgestattet sind, die es den betreffenden Unterstützungen ermöglichen, sich unabhängig voneinander in Längsrichtung zu bewegen,
eine Längenmessvorrichtung, mit der die Positionen der beiden voneinander unabhängig verlagerbaren Unterstützungen (13:1, 13:2, 13:3) entlang der Längsrichtung erkennbar sind,
einen oder mehrere Positionssensoren (41A, 41B), mit denen die geschwenkte Position der gegenüberliegenden Greifer- und Verdichterarme (37A, 37B) erkennbar sind.

2. Vorrichtung nach Anspruch 1, wobei die erste und dritte Betriebsvorrichtung (14:1, 14:3), die für die Verlagerung der ersten bzw. dritten Unterstützung (13:1, 13:3) vorgesehen sind, voneinander getrennt sind.

3. Vorrichtung nach einem der Ansprüche 1-2, wobei die Bindevorrichtung (15) durch die erste Unterstützung (13:1) unterstützt wird, während die Greifer- und Verdichterarme (37A, 37B) durch die zweite bzw. dritte Unterstützung (13:2, 13:3) unterstützt werden.

4. Vorrichtung nach einem der Ansprüche 1-3, umfassend eine Berechnungseinheit (43), wie beispielsweise einen Computer, zum Berechnen einer Querschnittsabmessung (D1, D2) des verdichteten Forstwirtschaftsmaterials (5) basierend auf der geschwenkten Position der gegenüberliegenden Greifer- und Verdichterarme (37A, 37B) während des Bindens.

5. Vorrichtung nach Anspruch 4, umfassend eine Berechnungseinheit (43) zum Berechnen des Volumens von erzeugtem Forstwirtschaftsmaterial (5), das gebündelt wurde, zur Bildung von Einheiten, die die Art von Stämmen aufweisen, basierend auf der berechneten Querschnittsabmessung (D1, D2) und einer vorgegebenen Bündellänge oder einer gemessenen Bündellänge (L1, L2) basierend auf Informationen der Längenmessvorrichtung.

6. Vorrichtung nach Anspruch 5, umfassend eine Berechnungseinheit (43) zum Berechnen des Gewichts des gebündelten Forstwirtschaftsmaterials (5) basierend auf der Dichte des gebündelten Forstwirtschaftsmaterials.

7. Vorrichtung nach einem der Ansprüche 1-6, wobei die Empfangsvorrichtung (10) einen Greifer (10) mit zwei gegenüberliegenden Arme (11) umfasst, die schwenken können und während des Bündelungsvorgangs zwischen ihnen ein Bündel von Forstwirtschaftsmaterial (5) in einer greifenden Weise empfangen und festhalten können.

8. Vorrichtung nach Anspruch 7, wobei der Greifer (10) an einem freien Ende eines horizontalen Auslegers (9) angeordnet ist, dessen gegenüberliegendes Ende in einer verbundenen Weise durch eine Welle (8A) mit einer vertikalen Unterstützung (8) vereint ist, in welcher die vertikale Position des Greifers mittels eines Steuer- und Aktuatormittels, das zwischen dem Ausleger und der vertikalen Unterstützung arbeitet, verändert werden kann.

9. Vorrichtung nach Anspruch 7, wobei die Bindevorrichtung (15) eine solche Abmessung relativ zum Greifer (10) aufweist, dass die Bindevorrichtung au-βerhalb des Greifers während einer Bewegung auf eine vordere Endposition zu passieren kann.

10. Vorrichtung nach einem der Ansprüche 1-9, jeder Greifer (37) umfassend eine fixierte Zwischenstützfläche (38:1), die zwischen den gegenüberliegenden Greifer- und Verdichterarmen (37A, 37B) angeordnet ist, einen Hilfshebearm (38A, 38B), der relativ zur fixierten Stützebene verlagert werden kann, mit welchem Hilfshebearm ein Bündel von Forstwirtschaftsmaterial von der Stützebene aufhebbar ist.

11. Vorrichtung nach einem der Ansprüche 1-10, wobei jeder Greifer- und Verdichterarm (37A, 37B) in Lagerungen montiert ist, um an einem Stützstift (39A, 39B) in der zugeordneten Unterstützung (13:1, 13:2, 13:3) schwenken zu können, und ausgelegt ist, um in einem Zustand positioniert zu werden, in dem er zum Kippen in eine Querrichtung um einem Winkel nach unten von der Vorrichtung veranlasst wird.

12. Vorrichtung nach Anspruch 11, wobei jeder Greifer- und Verdichterarm (37A, 37B) ein Doppelverbindungsarmpaar (37A:1, 37A:2; bzw. 37B:1, 37B:2) umfasst, dass in Lagerungen montiert ist, um an einem Stützstift (39A, 39B) zwischen ihnen zu schwenken.

13. Vorrichtung nach einem der Ansprüche 1-11, umfassend einen Träger (7), an welchem die Unterstützungen (13:1, 13:2, 13:3) unterstützt werden und in einer solchen Weise gesteuert werden, dass es ihnen ermöglicht wird, in der Längsrichtung des Trägers verlagert zu werden.

14. Vorrichtung nach Anspruch 13, wobei der Träger (7) kastenförmig ist und zwei Teile (7A und 7B) umfasst, von denen einer innerhalb des anderen teleskopisch aufgenommen ist, wobei der Träger durch einen hinteren Teil 7B verlängert werden kann, der nach außen in der Längsrichtung nach hinten von einem vorderen Teil 7A extrudiert ist.

15. Vorrichtung nach Anspruch 14, wobei die dritte Unterstützung (13:3) einen Teil des hinteren Teils (7B) des Trägers (7) bildet, der teleskopisch verlängert werden kann.

16. Geländefahrzeug, das mit einer Vorrichtung nach einem der Ansprüche 1-14 ausgestattet ist.

## Revendications

1. Dispositif pour le regroupement de parties allongées d'arbre (5) et de matériau forestier similaire pour former des unités gérables, comprenant un dispositif de réception (10) pour la collecte et l'orientation du matériau forestier dans une direction longitudinale,
un agencement de liaison (15) conçu pour fixer le matériau dans un état comprimé en le liant,
une ou plusieurs paires de pinces (37), dont chacune présente des bras opposés de préhension et de compression (37A, 37B) dont la tâche est d'entourer et de comprimer le matériau transversalement à sa direction longitudinale, plusieurs supports (13:1, 13:2, 13:3) sur lesquels ledit agencement de liaison et lesdites pinces opposées (37) sont commandés de manière à pouvoir être déplacés en mouvement alternatif dans la direction longitudinale,
un dispositif de fonctionnement (14:1, 14:2, 14:3) disposé au niveau de chaque support (13:1, 13:2, 13:3) pour le déplacement dudit support dans la direction longitudinale, **caractérisé en ce qu'**il comprend un premier, deuxième et troisième support (13:1, 13:2, 13:3), dont au moins deux des supports sont équipés de dispositifs de fonctionnement séparés (14:1, 14:3) qui permettent auxdits supports pertinents de se déplacer indépendamment les uns des autres dans la direction longitudinale,
un dispositif de mesure de longueur avec lequel les positions desdits deux supports déplaçables indépendamment (13:1, 13:2, 13:3) le long de la direction longitudinale peuvent être détectées,
un ou plusieurs capteurs de position (41A, 41B) avec lesquels la position pivotée des bras opposés de préhension et de compression (37A, 37B) peut être détectée.

2. Dispositif selon la revendication 1, dans lequel le premier et le troisième dispositif de fonctionnement (14:1, 14:3) qui sont utilisés pour le déplacement desdits premier et troisième supports (13:1, 13:3), respectivement, sont séparés l'un de l'autre.

3. Dispositif selon l'une quelconque des revendications 1 à 2, dans lequel l'agencement de liaison (15) est supporté par le premier support (13:1), tandis que les bras de préhension et de compression (37A, 37B) sont supportés par respectivement les deuxième et troisième supports (13:2, 13:3).

4. Dispositif selon l'une quelconque des revendications 1 à 3, comprenant une unité de calcul (43), telle qu'un ordinateur, pour le calcul d'une dimension en coupe transversale (D1, D2) du matériau forestier comprimé (5) sur la base de la position pivotée des bras opposés de préhension et de compression (37A, 37B) pendant la liaison.

5. Dispositif selon la revendication 4, comprenant une unité de calcul (43) pour le calcul du volume de matériau forestier (5) produit qui a été groupé pour former des unités ayant la nature de bûches sur la base de la dimension transversale calculée (D1, D2) et une longueur de faisceau prédéterminée ou une longueur de faisceau mesurée (L1, L2) sur la base d'informations provenant de l'unité de mesure de longueur.

6. Dispositif selon la revendication 5, comprenant une unité de calcul (43) pour le calcul du poids du matériau forestier groupé (5) sur la base de la densité du matériau forestier groupé.

7. Dispositif selon l'une quelconque des revendications 1 à 6, dans lequel le dispositif de réception (10) comprend une pince (10) avec deux bras opposés (11) qui peuvent pivoter et qui peuvent recevoir et retenir de manière agrippante entre eux une liasse de matériau forestier (5) pendant l'opération de groupement.

8. Dispositif selon la revendication 7, dans lequel la pince (10) est située à une extrémité libre d'une barre horizontale (9) dont l'extrémité opposée est réunie de manière articulée par un arbre (8A) avec un support vertical (8) dans lequel la position verticale de la pince peut être modifiée au moyen d'un moyen de commande et d'actionnement qui agit entre la barre et le support vertical.

9. Dispositif selon la revendication 7, dans lequel l'agencement de liaison (15) présente une telle dimension par rapport à la pince (10) que l'agencement de liaison peut passer de l'extérieur à la pince pendant le mouvement vers une position d'extrémité avant.

10. Dispositif selon l'une quelconque des revendications 1 à 9, dans lequel chaque pince (37) comprend une surface de support fixe intermédiaire (38:1) qui est située entre les bras opposés de préhension et de compression (37A, 37B), un bras de levage auxiliaire (38A, 38B) déplaçable par rapport au plan de support fixe, bras de levage auxiliaire avec lequel une liasse de matériau forestier peut être soulevée dudit plan de support.

11. Dispositif selon l'une quelconque des revendications 1 à 10, dans lequel chaque bras de préhension et de compression (37A, 37B) est monté dans des paliers pour pivoter au niveau d'un tenon de support (39A, 39B) dans le support associé (13:1, 13:2, 13:3) et agencé pour être positionné dans une condition dans laquelle il est amené à s'incliner dans une direction transversale à un angle vers le bas par rapport au dispositif.

12. Dispositif selon la revendication 11, dans lequel chaque bras de préhension et de compression (37A, 37B) comprend une paire de bras à double liaison (37A:1, 37A:2; respectivement 37B:1, 37B:2) qui est montée dans des paliers pour pivoter au niveau d'un tenon de support (39A, 39B) entre eux.

13. Dispositif selon l'une quelconque des revendications 1 à 11, comprenant une poutre (7) sur laquelle lesdits supports (13:1, 13:2, 13:3) sont supportés et commandés d'une manière qui leur permet de se déplacer dans la direction longitudinale de la poutre.

14. Dispositif selon la revendication 13, dans lequel la poutre (7) est en forme de boîte et comprend deux parties (7A et 7B) dont l'une est montée télescopiquement à l'intérieur de l'autre, ladite poutre pouvant être étendue à travers une partie arrière 7B étant extrudée vers l'extérieur dans la direction longitudinale vers l'arrière à partir d'une partie avant 7A.

15. Dispositif selon la revendication 14, dans lequel le troisième support (13:3) forme une partie de la partie arrière (7B) de la poutre (7) qui peut être étendue de manière télescopique.

16. Véhicule tout-terrain équipé d'un dispositif selon l'une quelconque des revendications 1 à 14.
